Europäisches Patentamt

European Patent Office

Office européen des brevets

(19)

(11) Veröffentlichungsnummer : **0 149 143**
**B1**

(12) EUROPÄISCHE PATENTSCHRIFT

(45) Veröffentlichungstag der Patentschrift :
04.03.87

(51) Int. Cl.⁴ : **C 08 G 65/20**

(21) Anmeldenummer : **84115276.2**

(22) Anmeldetag : **12.12.84**

(54) Verfahren zur kontinuierlichen Herstellung von Polyoxibutylen- polyoxialkylenglykolen.

(30) Priorität : 21.12.83 DE 3346136

(43) Veröffentlichungstag der Anmeldung :
24.07.85 Patentblatt 85/30

(45) Bekanntmachung des Hinweises auf die Patenterteilung : 04.03.87 Patentblatt 87/10

(84) Benannte Vertragsstaaten :
BE DE FR GB IT NL

(56) Entgegenhaltungen :
US-A- 4 228 272
US-A- 4 243 799

(73) Patentinhaber : BASF Aktiengesellschaft
Carl-Bosch-Strasse 38
D-6700 Ludwigshafen (DE)

(72) Erfinder : Mueller, Herbert, Dr. Chem.
Carostrasse 53
D-6710 Frankenthal (DE)

## Beschreibung

Diese Erfindung betrifft ein Verfahren zur kontinuierlichen Herstellung von Polyoxibutylenpolyoxialkylenglykolen durch Copolymerisation von Tetrahydrofuran mit 1,2-Alkylenoxiden an Bleicherde-Katalysatoren.

In der GB-A-854 958 wird ein Verfahren zur Copolymerisation von Tetra-hydrofuran und 1,2-Alkylenoxiden beschrieben, bei dem man die Polymerisation in Gegenwart von Verbindungen mit reaktivem Wasserstoff und an Bleicherde-Katalysatoren durchführt. Bei diesem Verfahren fallen als Nebenprodukte verhältnismäßig große Mengen niedermolekularer Produkte an, die überwiegend aus oligomeren cyclischen Ethern bestehen.

Bei diesen unerwünschten oligomeren cyclischen Ethern handelt es sich um Verunreinigungen und inertes Material, deren Entfernung aus den Polymerisaten z. B. eine aufwendige Depolymerisation (EP-A-6 107) erfordert. Aber auch durch diese Behandlungsweise gelingt die quantitative Entfernung nicht, die deshalb wünschenswert wäre, weil das Inertmaterial das mechanische Niveau der aus den Copolymeren hergestellten Polyurethane herabsetzt. Die Oligomeren können auch an der Oberfläche der Fertigprodukte ausschwitzen oder von Lösungsmitteln herausgelöst werden, wodurch die Formstabilität der Formkörper beeinträchtigt wird. Zur Vermeidung dieser Nachteile wird in der US-A-4 127 513 der Vorschlag gemacht, als Katalysator einen besonders aktivierten Montmorillonit zu verwenden, der dadurch entsteht, daß man die Säureaktivierung der Bleicherde mit höher konzentrierten Säuren vornimmt, so daß die austauschbaren Alkali- und Erdalkali-Ionen nahezu vollständig durch Wasserstoff substituiert werden. Nachteile sind bei diesem Prozeß die hohe Farbzahl der Polymerisate, eine verhältnismäßig geringe Polymerisationsgeschwindigkeit und ein Anteil von immer noch 5 bis 6 Gew.% an oligomeren cyclischen Ethern.

Ein weiterer Verbesserungsvorschlag für die Copolymerisation von Alkylenoxiden mit Tetrahydrofuran unter dem katalytischen Einfluß von aktivierter Bleicherde ist der US-A-4 228 272 zu entnehmen. Er sieht die Verwendung von Bleicherden mit einem bestimmten spezifischen Porenvolumen, einer definierten Katalysatoroberfläche und einem definierten Porendurchmesser vor. Nach einem Verfahren sollen Produkte mit verbesserter Farbzahl bei erhöhter Polymerisationsgeschwindigkeit erhalten werden. Ihr Oligomerengehalt ist aber mit etwa 4 Gew.% (vgl. Spalte 5, Zeile 14 und 15) für die Anwendungen der Copolymeren zur Herstellung von Polyurethanen, an die höhere mechanische Ansprüche gestellt werden, zu hoch.

Bekanntlich liefern alle Verfahren zur Copolymerisation von Alkylenoxiden mit Tetrahydrofuran in Gegenwart von Bleicherden hochmolekulare Copolymere mit endständigen Hydroxylgruppen, die durch 3 bis 4 Gew.% makrocyclische Polyether ohne Hydroxylgruppen verunreinigt sind. Diese makrocyclischen Ether stellen inertes Material dar, weil sie keine mit Isocyanatgruppen reagierende Hydroxylgruppen besitzen. Da diese cyclischen Oligomeren in den üblichen Lösungsmitteln sehr leicht löslich sind, können durch sie Verarbeitungsschwierigkeiten hervorgerufen werden. Sie beeinflussen die mechanischen Eigenschaften der Fertigprodukte nachteilig.

Aufgabe der vorliegenden Erfindung war es, ein Verfahren zur Herstellung hochwertiger Copolymere aus Tetrahydrofuran und 1,2-Alkylenoxiden zu finden, bei dem die Bildung merklicher Mengen cyclischer Ether vermieden wird.

Dieses Ziel wurde dadurch erreicht, daß man bei der kontinuierlichen Herstellung von Polyoxibutylenpolyoxialkylenglykolen deren Halbester oder Halbether durch Copolymerisation von Tetrahydrofuran mit einem 1,2-Alkylenoxid in Gegenwart von Verbindungen mit reaktivem Wasserstoff, wobei man die Polymerisation in einem Reaktor bei Temperaturen unter 50 °C an einem fest angeordneten Bleicherde-Katalysator und unter Rückführung des Reaktionsgemisches vornimmt, zum Reaktionsgemisch, welches man nach dem Durchströmen des Reaktors erneut dem Reaktor zuführt, weniger als 30 Gew.%, vorzugsweise weniger als 20 Gew.%, bezogen auf das zurückzuführende Reaktionsgemisch, eines Gemisches aus Tetrahydrofuran, 1,2-Alkylenoxid und einer Verbindung mit reaktivem Wasserstoff gibt.

Als 1,2-Alkylenoxide kommen unsubstituierte oder substituierte Alkylenoxide in Betracht. Als Substituenten seien z. B. lineare oder verzweigte Alkylengruppen mit 1 bis 6, vorzugsweise 1 bis 2 C-Atomen, Phenylreste, durch Alkyl- und/oder Alkoxigruppen mit 1 bis 2 C-Atomen oder Halogenatomen substituierte Phenylreste oder Halogenatome, vorzugsweise Chloratome genannt. Besonders geeignete 1,2-Alkylenoxide sind z. B. 1,2-Butylenoxid, 2,3-Butylenoxid, Styroloxid, Epichlorhydrin und vorzugsweise Ethylenoxid und 1,2-Propylenoxid. Die 1,2-Alkylenoxide können einzeln oder in Form von Mischungen, beispielsweise als ein Gemisch aus Ethylenoxid und 1,2-Propylenoxid verwendet werden.

Verbindungen mit reaktivem Wasserstoff sind beispielsweise Wasser, ein- und mehrwertige Alkohole, wie Methanol, Ethanol, Propanol, Ethylenglykol, Butylenglykol, Glycerin, Neopentylglykol und Butandiol sowie insbesondere Carbonsäuren mit z. B. 1 bis 8, vorzugsweise 1 bis 3 Kohlenstoffatomen. Besonders geeignet sind Wasser und Carbonsäuren, wie Ameisensäuren, Essigsäure und Propionsäure, da bei ihrer Verwendung auch bei verhältnismäßig hohen Polymerisationstemperaturen von z. B. 35 bis 50 °C kaum oligomere cyclischen Ether gebildet werden. Bei der Verwendung von Wasser und von mehrwertigen Alkoholen entstehen die freien Po-

2

lyoxibutylenpolyoxialkylenglykole. Verwendet man als Verbindungen mit reaktivem Wasserstoff Carbonsäuren oder einwertige Alkohole, so entstehen dagegen die entsprechenden Halbester bzw. Halbether der Polyoxibutylenpolyoxialkylenglykole.

Als Reaktoren sind z. B. säulenförmige Reaktionsgefäße geeignet, die einen Querschnitt von beliebiger Form, beispielsweise eines Quadrates oder einer Ellipse aufweisen. Zweckmäßigerweise verwendet man langgestreckte zylinderförmige Reaktionsgefäße. Das Verhältnis von Innendurchmesser zu Länge des Reaktionsgefäßes beträgt im allgemeinen 1 : 2 bis 1 : 100, vorzugsweise 1 : 10 bis 1 : 40. Die Reaktoren können senkrecht oder waagrecht ausgerichtet sein und auch Zwischenlagen einnehmen. Vorzugsweise verwendet man als Reaktoren jedoch senkrecht stehende Röhrenöfen, bei denen der Rohrdurchmesser etwa 10 bis 100 mm beträgt, wenn die Wärmetönung im Reaktionsgefäß abgeführt werden soll. Wird die Temperatur durch einen im äußeren Kreislauf eingebauten Wärmetauscher reguliert, so kann man als Reaktor auch einen Schlachtofen verwenden.

Die als Katalysatoren zu verwendenden Bleicherden werden z. B. in Ullmann's Enzyklopädie der technischen Chemie, 3. Auflage, Bd. IV, Seiten 541 bis 545 beschrieben. Es sind natürliche oder synthetische Bleicherden, wie Aluminiumhydrosilikate oder Aluminiummagnesiumhydrosilikate vom Typ des Montmorillonits, die durch Säure aktiviert sein können und z. B. unter der Bezeichnung « Tonsil »® im Handel erhältlich sind. Synthetische Bleicherden werden z. B. in der GB-A-854 958 beschrieben. Bleicherden enthalten, bedingt durch ihre Herstellung wechselnde Wassermengen von ca. 2 bis 7 Gew.%. Durch Trocknen oberhalb von 100 °C verlieren die Bleicherden das adsorbierte Wasser, nehmen es an der Luft aber wieder auf, da sie hygroskopisch sind. Besonders vorteilhafte Ergebnisse werden mit Bleicherde-Katalysatoren erzielt, deren Wassergehalt unter 1 Gew.%, insbesondere unter 0,5 Gew.% liegt.

Zur Herstellung der im Reaktor fest angeordneten Bleicherde-Katalysatoren verfährt man z. B. so, daß man die handelsüblichen wasserhaltigen Bleicherden z. B. mit Bindemitteln, insbesondere Wasser, verknetet und zu Formkörpern verpreßt. Anschließend werden die wasserhaltigen Formkörper oberhalb 100 °C, vorzugsweise bei Temperaturen von 150 bis 700 °C bei Normaldruck oder bei vermindertem Druck, gegebenenfalls in Gegenwart von unter den Reaktionsbedingungen inerten Gasen, z. B. Edelgasen, wie Helium oder Argon, oder insbesondere Stickstoff, entwässert. Der Wassergehalt der Katalysatorformkörper liegt danach unter 1 Gew.%. Man reduziert ihn vorzugsweise auf Werte unter 0,5 Gew.%.

Die Bleicherdepreßlinge können z. B. die Form von Kugeln, Ringen, Zylindern oder Tabletten aufweisen. Bei Verwendung von kugelförmigen Bleicherdeformkörpern weisen die Kugeln im allgemeinen einen Durchmesser von 2 bis 15 mm, vorzugsweise 3 bis 5 mm auf. Als zylinderförmige Formkörper werden im allgemeinen Zylinder mit einer Länge von 2 bis 15 mm und einem Durchmesser von 2 bis 6 mm verwendet. Nicht kugel- oder zylinderförmige Formkörper weisen im allgemeinen ein Volumen auf, das dem der zylinderförmigen Formkörper entspricht.

Die Katalysator-Formkörper werden in dem Reaktor z. B. durch einfaches Aufschütten fest angeordnet. Das durch das Reaktionsgemisch durchströmte Katalysatorbett muß auch nach längerem Betrieb nicht erneuert werden, da die Katalysator-Formkörper ihre ursprüngliche feste Form behalten und keinen Abrieb erleiden. Die Katalysatoren zeichen sich auch durch einen geringen Aktivitätsverlust aus und besitzen eine lange Lebensdauer.

Die monomeren Einsatzstoffe Tetrahydrofuran und 1,2-Alkyenoxide werden zweckmäßigerweise in möglichst reiner Form verwendet. Dadurch wird eine lange Lebensdauer der Bleicherde-Katalysatoren gewährleistet. Das Tetrahydrofuran wird zum Zwecke der Reinigung vor der Polymerisation mit starken Mineralsäuren, organischen Sulfonsäuren, Silikagel und vorzugsweise Bleicherden nach dem in der EP-A-3 112 beschriebenen Verfahren vorbehandelt.

Das Molverhältnis, in dem man die Monomeren Tetrahydrofuran und Alkylenoxid zur Reaktion bringt, kann in weiten Grenzen variiert werden. Bei vorteilaften Monomerenmischungen liegt das Molverhältnis Tetrahydrofuran zu Alkenoxid zwischen den Werten 20 zu 1 und 1 zu 20, vorzugsweise zwischen 10 zu 1 und 1 zu 10 und insbesondere zwischen 10 zu 1 und 1 zu 5. Die Konzentration an der Verbindung mit aktivem Wasserstoff im Ausgangsgemisch liegt meist im Bereich von 0,5 bis 15, vorzugsweise 1 bis 10 Mol.%.

Die Copolymerisation wird in dem fest angeordneten Katalysatorbett bei Temperaturen von 0 bis 50 °C, vorzugsweise zwischen 20 und 45 °C bei Normaldruck durchgeführt. Copolymerisationsmischungen mit einem hohen Ethylenoxid-Anteil werden zweckmäßigerweise unter erhöhtem Druck copolymerisiert. Bei diesen Reaktionstemperaturen beträgt die bevorzugte Verweilzeit am Katalysator 0,5 bis 4 Stunden.

Nach dem erfindungsgemäßen Verfahren leitet man das Gemisch der Ausgangsstoffe zur Copolymerisation durch den Reaktor, wobei man das den Reaktor verlassende Reaktionsgemisch zum erneuten Durchsatz in den Reaktor zurückleitet. Dabei wird zum Reaktionsgemisch vor der erneuten Einleitung in den Reaktor weniger als 30 Gew.%, vorzugsweise weniger als 20 Gew.%, bezogen auf das zurückzuführende Reaktionsgemisch, an dem Gemisch der monomeren Ausgangsstoffe frisch zugegeben. Während sich die Verbindung mit reaktivem Wasserstoff stets nahezu vollständig umsetzt, verbleibt ein Überschuß an Alkylenoxid oder Tetrahydrofuran nicht umgesetzt im Reaktionsgemisch.

Da die Copolymerisation exotherm verläuft, sorgt man durch Kühlung des Reaktors oder des Stroms des Reaktionsgemisches, der außerhalb des Reaktors im Kreislauf gepumpt wird, für Temperaturkonstanz. In dem Maße, in dem man dem Reaktor frisches Ausgangsgemisch zuführt, wird aus dem aus dem Reaktor austretenden Reaktionsgemisch kontinuierlich ein Teilstrom abgezweigt. Dieser das Verfahrensprodukt enthaltende Teilstrom ist im wesentlichen frei von 1,2-Alkylenoxid bzw. von Tetrahydrofuran und von Verbindungen mit reaktivem Wasserstoff. Er besteht z. B. aus einem Gemisch aus 30 bis 60 Gew.% Copolymerisat und 40 bis 70 Gew.% Tetrahydrofuran. Die Umsetzung liegt im allgemeinen zwischen 35 und 55 % des eingesetzten Tetrahydrofurans. Das überschüssige Tetrahydrofuran wird durch Destillation unter Umständen im Vakuum vollständig abgetrennt. Die im Sumpf zurückbleibenden Glykole können nun direkt zur Herstellung von Polyurethanharzen verwendet werden. Die entsprechenden Halbester müssen dabei von der Umsetzung mit den Isocyanaten zu den Glykolen verseift werden. Die entsprechenden Halbester lassen sich ohne weitere Behandlung als Schmierstoffe verwenden.

Die erhaltenen Produkte, insbesondere solche mit Molekulargewichten von 300 bis 5 000 sind für die Herstellung von Polyurethanen oder Polyestern hervorragend geeignet. Sie verleihen den Fertigpolymerisaten ein hohes mechanisches Niveau bei guter Kältefestigkeit, Mikroben- und Verseifungsfestigkeit. Im Vergleich zu Polytetramethylenetherglykol besitzen sie einen niedrigen Erstarrungspunkt und können daher vorwiegend in flüssiger Form verarbeitet werden, ohne daß zuvor kostspielige Verflüssigungs- oder Schmelzprozesse durchgeführt werden müssen.

Das erfindungsgemäße Verfahren hat den erheblichen Vorteil, daß bei der Copolymerisation praktisch keine Nebenprodukte, insbesondere keine cyclischen Oligomere gebildet werden und daß die Reaktion zu einem vollständigen Umsatz des 1,2-Alkylenoxids und der Verbindung mit reaktivem Wasserstoff führt. Die erhaltenen Copolymerisate besitzen eine äußerst niedrige Farbzahl, was sich sehr günstig auf die Verarbeitung auswirkt. Die Polymerisate weisen pro Molekül 2 Hydroxylgruppen, eine Hydroxylgruppe und eine Estergruppe oder eine Hydroxylgruppe und eine Ethergruppe auf. Erstaunlicherweise erhält man bei der Verwendung von Bleicherde in getrocknetem Zustand besonders vorteilhafte Ergebnisse, obwohl die Polymerisation in Gegenwart von Wasser als Verbindung mit reaktivem Wasserstoff durchgeführt werden kann. Unerklärlicherweise sinkt die Reaktionsgeschwindigkeit stark ab, wenn Bleicherden verwendet, die z. B. 3 bis 5 Gew.% Wasser enthalten.

Das erfindungsgemäße Verfahren weist weiterhin den Vorteil auf, daß die fertige Reaktionsmischung, in der die Copolymeren in Konzentrationen von 40 bis 60 % enthalten sind, nur der Befreiung von überschüssigem Tetrahydrofuran bedürfen, um der Endanwendung, z. B. der Herstellung von Polyurethanen zugeführt werden zu können. Das zweckmäßigerweise durch Destillation im Vakuum zu entfernende Tetrahydrofuran kann erneut, ohne daß es einer Reinigungsoperation bedarf, für die Umsetzung verwendet werden.

Die folgenden Beispiele sollen das erfindungsgemäße Verfahren näher erläutern ohne es zu begrenzen. Die genannten Teile sind Gewichtsteile ; sie verhalten sich zu Volumenteilen wie Kilogramm zu Litern.

Beispiel 1

Marktgängiges technisches Tetrahydrofuran wurde nach Beispiel 1 der EP-A-3 112 gereinigt und für die Copolymerisation verwendet.

Aus im Handel unter der Bezeichnung Tonsil Optimum FF® der Süd-Chemie AG, München erhältlichen Bleicherden wurden Strangpreßlinge mit einem Durchmesser von 2 bis 3 mm und einer durchschnittlichen Länge von 4 mm hergestellt und 4 Stunden bei 200 °C getrocknet.

Die getrockneten Strangpreßlinge wurden in ein mit einem thermostatisierten Kühlmantel versehenes Reaktionsrohr mit einem Inhalt von 1 000 Volumenteilen und einem Verhältnis von Durchmesser zu Länge von ungefähr 5 zu 70 eingefüllt. In dem Reaktionsrohr wurde der wie folgt beschriebene stationäre Reaktionszustand eingestellt. Eine Lösung aus 48 Teilen Tetrahydrofuran und 52 Teilen eines Copolymerisates, das aus 32 Gew.-Teilen Tetrahydrofuran und 20 Gew.-Teilen Propylenoxid erhalten worden war, wurde mit einer Geschwindigkeit von 5 000 Gew.-Teilen pro Stunde am unteren Ende aus dem Reaktionsrohr herausgepumpt, über einen Wärmetauscher gegeben, durch den die Temperatur auf 35 °C eingestellt wurde, und danach dem Reaktionsrohr von oben wieder zugeführt. Zum Reaktionsgemisch wurden kurz vor Eintritt in das Reaktionsrohr stündlich 200 Teile eines Frischzulaufes gegeben, der aus 80 Teilen Tetrahydrofuran, 20 Teilen Propylenoxid und 1,3 Teilen Wasser zusammengesetzt war. Durch den Kühlmantel des Reaktionsrohres wurde ein Kühlmedium geleitet, dessen Temperatur zwischen 33 und 35 °C gehalten wurde. Am unteren Ende des reaktionsrohres war eine seitliche Ableitung angebracht, die zu einem Siphon führte, welcher der Höhe des gefüllten Reaktionsrohres entsprach. Aus dieser Ableitung strömte Reaktionsgemisch im Ausmaß der durch den Frischzulauf bedingten Volumenzunahme. Der Siphon war so hoch angebracht, daß das Reaktionsrohr in Abwesenheit einer oberen Gasphase, d. h. ganz mit Flüssigkeit gefüllt, betrieben werden konnte. Wurde der durch die Ableitung erhaltene Reaktionsaustrag durch Verdampfen vom nicht umgesetzten Tetrahydrofuran unter Normaldruck und im Vakuum befreit, so erhielt man stündlich 108 Teile eines Blockcopolymerisates, das nach Analysenergebnissen der $^1$H-NMR bzw. $^{13}$C-NMR-Methode aus 32 Teilen Tetrahydrofuran und 20 Teilen Propylenoxid aufgebaut war. Das Polyetherglykol hatte 65 % primäre sowie 35 % sekundäre Hydroxylgruppen und ein Molekulargewicht, berechnet aus der Hydroxylzahl, von 990. Die Farbzahl lag bei 10 APHA. Es ließ sich nach den üblichen Methoden mit Isocyanaten zu Polyurethanen oder mit Dicarbonsäuren zu Polyester verarbeiten. Wie durch Vakuumdestillation bei einem Vakuum von $10^{-7}$ Torr und 200 °C Verdampfungstemperatur festgestellt wurde, enthielt das so gewonnene Copolymerisat weniger als 1 % flüchtige oligomere cyclische Ether.

Beispiel 2

Beispiel 1 wurde wiederholt, wobei jedoch Propylenoxid durch die äquimolekulare Menge Ethylenoxid ersetzt wurde. Es wurde ein vollständiger Umsatz des Ethylenoxides und ein solcher von 46 % des Tetrahydrofurans erreicht. Das Copolymerisat war frei von cyclischen Oligomeren und hatte eine Farbzahl von 30 APHA.

Beispiel 3

Entsprechend Beispiel 1 wurde bei 25 °C ein Monomerengemisch aus 258 Teilen Tetrahydrofuran, 64 Teilen Propylenoxid und 23 Teilen Neopentylglykol polymerisiert. Die Verweildauer wurde nicht geändert. Bei vollständigem Umsatz des Propylenoxids wurden ca. 40 % des eingesetzten Tetrahydrofurans in das Polymere eingebaut. Es wurde ein vom oligomeren cyclischen Ether freies Polymerenetherglykol mit dem Molekulargewicht 980 erhalten.

Beispiel 4

Entsprechend Beispiel 1 wurde ein Monomerengemisch aus 266 Teilen Tetrahydrofuran, 67 Teilen Propylenoxid und 21 Teilen Butandiol-1,4 polymerisiert. Das Propylenoxid wurde quantitativ zum Copolymeren umgesetzt. Vom eingesetzten Tetrahydrofuran wurden 52 Gew.% in das Polymere eingebaut. Das Molekulargewicht des polymeren Polyetherglykols betrug 1 050. Der Anteil an cyclischen Oligomeren betrug 2 Gew.%.

Vergleichsbeispiel

(Wiederholte Rückführung des Reaktionsgemisches unter Frischzugabe von Propylenoxid, entsprechend der Lehre von Beispiel 1 der britischen Patentschrift 854 958.)

Wie im Beispiel 1 der GB-PS 854 958 beschrieben, wurde zunächst ein stationärer Reaktionszustand bei 35 °C eingestellt. Dann wurden pro Stunde 5 000 Gewichtsteile des Reaktionsproduktes, das aus einer 52 Gew.%igen Lösung des Copolymerisates in Tetrahydrofuran bestand, umgepumpt. Der Reaktionskreis war mit einem Zusatzgefäß (1 000 Vol.-Teile) ausgerüstet. Dem Reaktionsrohr wurden am oberen Ende mit einer Geschwindigkeit von 1 000 Gewichtsteilen pro Stunde Propylenoxid zugeführt. Nach zwei Stunden war aus dem ursprünglichen Reaktionsgemisch eine Mischung entstanden, die aus 60 Gew.% Polymerisat und 40 Gew.% Tetrahydrofuran bestand. Das Polymerisat setzte sich aus 32 Gewichtsteilen Tetrahydrofuran und 40 Gewichtsteilen Propylenoxid zusammen. Durch Destillation in Vakuum wurde festgestellt, daß 12 Gew.% flüchtige oligomere cyclische Ether entstanden waren.

Beispiel 5

Wie in Beispiel 1 beschrieben, wurde als Frischzulauf ein Monomerengemisch aus 577 Teilen Tetrahydrofuran, 60 Teilen Propylenoxid und 31 Teilen Essigsäure bei 40 °C polymerisiert. Das Propylenoxid setzte sich vollständig und das Tetrahydrofuran zu 45 % um. Das Polymerisat besaß eine OH-Zahl von 45 mg KOH/g und eine Verseifungszahl von 43 mg KOH/g. Daraus errechnet sich ein Molekulargewicht von 1 250.

Man verfuhr wie beschrieben, wobei man diesmal jedoch als Frischzulauf ein Monomerengemisch aus 120 Teilen Tetrahydrofuran, 600 Teilen Propylenoxid und 38 Teilen Essigsäure verwendete. Durch Polymerisation bei 25 °C erhielt man ein Mischoligomerisat, das zu 60 Gew.% aus Propylenoxid und 40 Gew.% aus Tetrahydrofuran aufgebaut war. Das Molekulargewicht betrug 900.

**Patentansprüche**

1. Verfahren zur kontinuierlichen Herstellung von Polyoxibutylenpolyoxialkylenglykolen, deren Halbester oder Halbether durch Copolymerisation von Tetrahydrofuran mit einem 1,2-Alkylenoxid in Gegenwart von Verbindungen mit reaktivem Wasserstoff, wobei man die Polymerisation in einem Reaktor bei Temperaturen unter 50 °C an einem fest angeordneten Bleicherde-Katalysator und unter Rückführung des Reaktionsgemisches vornimmt, dadurch gekennzeichnet, daß man zum Reaktionsgemisch, welches man nach dem Durchströmen des Reaktors erneut dem Reaktor zuführt, weniger als 30 Gew.%, bezogen auf das zurückzuführende Reaktionsgemisch, eines Gemisches aus Tetrahydrofuran, 1,2-Alkylenoxid und einer Verbindung mit reaktivem Wasserstoff gibt.

2. Verfahren nach Anspruch 1, dadurch gekennzeichnet, daß man als 1,2-Alkylenoxid Ethylenoxid und/oder 1,2-Propylenoxid verwendet.

3. Verfahren nach Anspruch 1, dadurch gekennzeichnet, daß das Molverhältnis von Tetrahydrofuran zum 1,2-Alkylenoxid in der Monomerenmischung, die der Polymerisation zugeführt wird, 20 : 1 bis 1 : 20 beträgt.

4. Verfahren nach Anspruch 1, dadurch gekennzeichnet, daß die Copolymerisation bei einer Reaktionstemperatur von 0 bis 50 °C unter Normaldruck durchgeführt wird.

5. Verfahren nach Anspruch 1, dadurch gekennzeichnet, daß die Copolymerisation mit einer Verweildauer am Katalysator von 0,5 bis 4 Stunden durchgeführt wird.

6. Verfahren nach Anspruch 1, dadurch gekennzeichnet, daß man als Verbindung mit reaktivem Wasserstoff Wasser verwendet.

7. Verfahren nach Anspruch 1, dadurch gekennzeichnet, daß man als Verbindung mit reaktivem Wasserstoff eine Carbonsäure verwendet.

8. Verfahren nach Anspruch 1, dadurch gekennzeichnet, daß man einen Bleicherde-Katalysator mit einem Wassergehalt von unter 1 Gew.% verwendet.

## Claims

1. A process for the continuous preparation of a polyoxybutylene polyoxyalkylene glycol or its half-esters or half-ethers by copolymerization of tetrahydrofuran with a 1,2-alkylene oxide in the presence of a compound containing reactive hydrogen, the polymerization being carried out in a reactor at below 50 °C over a fixed-bed bleaching clay catalyst, with recycling of the reaction mixture, wherein less than 30 % by weight, based on the reaction mixture to be recycled, of a mixture of tetrahydrofuran, 1,2-alkylene oxide and a compound containing reactive hydrogen is added to the reaction mixture which is recycled to the reactor after flowing through the latter.

2. A process as claimed in claim 1, wherein the 1,2-alkylene oxide used is ethylene oxide or 1,2-propylene oxide or a mixture of these.

3. A process as claimed in claim 1, wherein the molar ratio of tetrahydrofuran to the 1,2-alkylene oxide in the monomer mixture fed to the polymerization is from 20 : 1 to 1 : 20.

4. A process as claimed in claim 1, wherein the copolymerization is carried out at from 0 to 50 °C and under atmospheric pressure.

5. A process as claimed in claim 1, wherein the copolymerization is carried out using a residence time over the catalyst of from 0.5 to 4 hours.

6. A process as claimed in claim 1, wherein water is used as the compound containing reactive hydrogen.

7. A process as claimed in claim 1, wherein a carboxylic acid is used as the compound containing reactive hydrogen.

8. A process as claimed in claim 1, wherein a bleaching clay catalyst containing less than 1 % by weight of water is used.

## Revendications

1. Procédé de préparation en continu de polyoxybutylène-polyoxyalkylèneglycols, de leurs semi-esters ou de leurs semi-éthers par copolymérisation de tétrahydrofuranne avec un oxyde de 1,2-alkylène en présence de composés à hydrogène réactif, la polymérisation étant effectuée dans un réacteur a une température inférieure à 50 °C en présence d'un catalyseur à base de terre décolorante disposé en lit fixe et avec recyclage du mélange réactionnel, caractérisé en ce qu'on ajoute au mélange réactionnel que l'on envoie de nouveau dans le réacteur après qu'il a traversé celui-ci, moins de 30 % en poids, par rapport au mélange réactionnel à recycler, d'un mélange de tétrahydrofuranne, d'oxyde de 1,2-alkylène et d'un composé à hydrogène réactif.

2. Procédé selon la revendication 1, caractérisé en ce qu'on utilise, en tant qu'oxyde de 1,2-alkylène, l'oxyde d'éthylène et/ou l'oxyde de 1,2-propylène.

3. Procédé selon la revendication 1, caractérisé en ce que le rapport molaire du tétrahydrofuranne à l'oxyde de 1,2-alkylène, dans le mélange de monomères qui est recyclé dans la polymérisation, est compris entre 20 : 1 et 1 : 20.

4. Procédé selon la revendication 1, caractérisé en ce que la polymérisation est conduite à une température de réaction de 0 à 50 °C sous la pression atmosphérique normale.

5. Procédé selon la revendication 1, caractérisé en ce que la polymérisation est conduite avec une durée de séjour sur le catalyseur de 0,5 à 4 heures.

6. Procédé selon la revendication 1, caractérisé en ce qu'on utilise l'eau en tant que composé à hydrogène réactif.

7. Procédé selon la revendication 1, caractérisé en ce qu'on utilise un acide carboxylique en tant que composé à hydrogène réactif.

8. Procédé selon la revendication 1, caractérisé en ce qu'on utilise un catalyseur à base de terre décolorante ayant une teneur en eau de moins de 1 % en poids.